# EUROPÄISCHE PATENTANMELDUNG

(11) **EP 0 735 400 A2**
(43) Veröffentlichungstag der Anmeldung: **02.10.1996**
(21) Anmeldenummer: 96105027.5
(22) Anmeldetag: 29.03.1996
(51) Int. Cl.: G02B 27/18, G02B 17/06, G02B 26/08

(54) **Vorrichtung zum Erzeugen von frei in den Raum projizierten Bildern mittels Hohlspiegeln mit einstellbarer Krümmung**

(30) Priorität: 31.03.1995 DE 19513184
(71) Anmelder: Maass, Uwe, 51491 Overath (DE)
(72) Erfinder: Maass,Uwe, 51491 Overath (DE); Becker, Christjan, 51491 Overath (DE)
(74) Vertreter: Berkenfeld, Helmut, Dipl.-Ing.

(57) **Zusammenfassung**

Es sollen Luftbilder mit einer Kantenlänge von etwa 1 dm bis etwa 1 m oder mehr erzeugt werden, von denen der Betrachter glaubt, daß sie frei im Raum schweben. Deshalb werden sie Luftbilder genannt. Hierzu wird ein Bildgeber auf einen Hohlspiegel gerichtet, der das Bild auf einen weiteren Hohlspiegel richtet, der das Bild in den freien Raum projiziert. Beide Hohlspiegel weisen eine einstellbare Krümmung auf. Der Betrachter sieht das von ihnen in den freien Raum projizierte Luftbild. Der Raum ist zweckmäßig abgedunkelt. Der Bildgeber kann ein Projektor oder ein Fernsehgerät sein. Die Vorrichtung wird in Theatern, Schulen oder bei Lehrveranstaltungen verwendet.

## Beschreibung

Die Erfindung betrifft eine Vorrichtung zum Erzeugen von Luftbildern mit einem Bildgeber und mit im Weg der von diesem abgegebenen Lichtstrahlen angeordneten Spiegeln, wobei der Bildgeber auf einen ersten Spiegel und dieser auf einen zweiten Spiegel gerichtet ist, der zweite Spiegel die Lichtstrahlen in Richtung auf einen Betrachter wirft und der Bildgeber und der erste Spiegel außerhalb des Weges der von dem zweiten Spiegel reflektierten Lichtstrahlen liegen.

In Museen, Theatern, Schulen und bei jeder Art von Vorführungen in geschlossenen Räumen werden einem Publikum Bilder vorgeführt. Hierzu verwendet man Bildgeber, wie zum Beispiel Dia- und Filmprojektoren, mit denen die Bilder auf eine Leinwand projiziert werden. Es gibt auch Overhead-Projektoren, mit denen auf einem Tisch oder einem Pult liegende Vorlagen auf eine Leinwand projiziert werden. Die Verwendung einer Leinwand zur Darstellung des Bildes ist diesen Verfahren gemeinsam. Die Leinwand muß an einem Ort aufgestellt werden, der auf den Bildgeber und die Zuschauer abgestimmt ist. Die Leinwand muß sich in einem bestimmten Abstand von dem Bildgeber befinden und parallel zu diesem ausgerichtet sein. Weiter müssen die Betrachter sie gut erkennen können. In manchen Räumen oder Hallen kann dies schwierig sein. Die Verwendung einer Leinwand verleiht der Darstellung des Films oder der Darstellung von Bildern auch einen statischen Charakter. Der Film und die Bilder erscheinen immer an der gleichen Stelle, nämlich auf der Leinwand.

Eine Vorrichtung der eingangs genannten Gattung ist seit Ende der zwanziger Jahre bekannt (DE-PS 482 602). Sie sollte als Reklamevorrichtung verwendet werden. Sie fand jedoch keinen Eingang in die Praxis. Vermutlich lag dies daran, daß der erste und der zweite Spiegel beide Planspiegel waren.

Die optischen Eigenschaften dieser Spiegel sind starr und unveränderlich. Eine Einwirkung auf das Luftbild lassen sie nicht zu. Große Luftbilder verlangen auch große Spiegel. Große Spiegel mit großer Fläche sind, falls an ihre Güte hohe Anforderungen gestellt werden, sehr teuer. Bekannt ist auch eine Einrichtung zum Erzeugen von Bildern im Raum (DE-PS 519 718). Diese bekannte Einrichtung enthält einen Hohlspiegel. Das Besondere dieser Einrichtung liegt in der Drehbarkeit dieses Hohlspiegels um seine Längsachse.

Der Erfinder hat nach einer Möglichkeit gesucht, die Darstellung von Filmen und Bildern von den bei der Vorführung in geschlossenen Räumen gegebenen Beschränkungen zu lösen und auch dem Betrachter die Möglichkeit zu geben, sich von einer wirklichen oder vermeintlichen Fixierung auf die Leinwand zu lösen. Hiervon ausgehend stellt sich für die vorliegende Erfindung die Aufgabe, eine Vorrichtung zu entwickeln, mit der ein von einem Bildgeber der eingangs genannten Art erzeugtes Bild ohne Verwendung einer Leinwand oder dergleichen sozusagen freischwebend im Raum dargestellt und betrachtet werden kann. Die Erfindung soll weiter dem Vorführer die Möglichkeit geben, auf das erzeugte Luftbild zum Beispiel durch Verändern von Brennweiten der Vorrichtungsteile einzuwirken. Weiter soll das Luftbild eine hohe optische Güte aufweisen. Ausgehend von der eingangs genannten Vorrichtung ergibt sich die Lösung für diese Aufgabe nach der Erfindung dann, wenn der erste und der zweite Spiegel als Hohlspiegel ausgebildet sind und ihre Krümmung einstellbar ist. Hohlspiegel mit veränderlicher Krümmung haben eine einstellbare Brennweite. Damit kann der Vorführer durch Verändern der Brennweite der Hohlspiegel auf das Entstehen und damit die Eigenschaften des Luftbildes einwirken. Die Einstellbarkeit der Krümmung der Hohlspiegel läßt auch einen Ausgleich von optischen Fehlern zu.

Es hat sich gezeigt, daß das von dem Bildgeber auf den ersten und von diesem auf den zweiten Hohlspiegel projizierte und reflektierte Bild in einer gewissen Entfernung vor dem zweiten Hohlspiegel im Raum sichtbar wird und dort zu stehen scheint. Zur Vereinfachung der Beschreibung wird dieses Bild Luftbild genannt. Voraussetzung ist, daß sich die Vorrichtung in einem dunklen oder abgedunkelten Raum befindet. Ein in diesem Raum stehender Betrachter sieht dieses Luftbild freischwebend im Raum. Dabei kann es sich um ein Standbild, wie ein Dia, oder auch um bewegte Bilder, wie bei einem Film, handeln. In beiden Fällen kann der Betrachter das Luftbild genau erkennen. Er erkennt nicht und kann gedanklich nicht ermitteln, wo sich das Luftbild im Raum befindet. Trotz der physikalisch einwandfreien Darstellung des Bildes im Raum glaubt der Betrachter an eine Illusion. Der Wert der Darstellung wird dadurch jedoch nicht gemindert. Er kann sich sogar erhöhen.

Der Bildgeber und der erste Hohlspiegel dürfen nicht im Weg der vom zweiten Hohlspiegel reflektierten Lichtstrahlen liegen. Zweckmäßig ist der Bildgeber unter und der erste Hohlspiegel über den von dem zweiten Hohlspiegel reflektierten Lichtstrahlen angeordnet.

Die Maße der Hohlspiegel müssen aufeinander abgestimmt sein und in vorgegebenen Bereichen liegen. Nach der Erfindung soll die Tiefe eines Hohlspiegels bei einem Durchmesser von 2000 mm zwischen 70 und 200 mm, vorzugsweise 80 bis 150 mm, liegen. Unter Tiefe wird dabei die Strecke verstanden, die die gewölbte reflektierende Fläche des Hohlspiegels in Richtung auf dessen plane Rückseite eingesenkt ist.

Es wurde ausgeführt, daß das Luftbild für den Betrachter frei im Raum schwebt und dieser den genauen Ort des Luftbildes nicht erkennen kann. Bei manchen Arten von Bildern kann der sich dabei ergebende Gedanke an eine Illusion abträglich sein. Die Erfindung kann auch hier abhelfen. Dies erfolgt mit einem Laser, der Laserstrahlen in Richtung auf den Betrachter wirft. Laserstrahlen sind sehr feine, kohärente Strahlen. In einem Raum, der immer mit etwas Staub oder Wasserdampf gefüllt ist, sind sie sichtbar. Der Betrachter sieht sie wie normale Lichtstrahlen. Sie bilden für ihn einen Bezugspunkt im Raum, und er orientiert sich an ihnen. Diese Laserstrahlen ermöglichen dem Betrachter, im Raum zwischen vorne und hinten zu unterscheiden und damit auch das Luftbild einer bestimmten Stelle im Raum zuzuordnen. Es erscheint wie ein wirkliches Bild ohne jeglichen illusionären Charakter. Zweckmäßig wirft der Laser die von ihm erzeugten Laserstrahlen auf einen Spiegel, und dieser reflektiert die Laserstrahlen in Richtung auf den Betrachter. Vorteilhafterweise wird der Spiegel auf dem Bildgeber selbst angeordnet. Die Laserstrahlen können ein- oder mehrfarbig sein. Bei einem Raum mit reiner Luft sind sie kaum zu erkennen. Hier empfiehlt sich das Einblasen von etwas Dampf in den Raum. Hierzu eignet sich Trockeneis oder Kohlensäureschnee. Bei Eingeben von Trockeneis oder Kohlensäureschnee in einen Raum mit normaler Umgebungstemperatur verdampfen das Eis und der Schnee augenblicklich. Die Laserstrahlen werden am Dampf gestreut und damit sichtbar.

Hohlspiegel werden im allgemeinen aus hochwertigem optischem Glas geschliffen. Ein auf diese Weise gefertigter Hohlspiegel kostet bei einem Durchmesser von 1000 mm mindestens einige zehntausend DM. Erfindungsgemäß lassen sich Hohlspiegel mit für den Anwendungszweck ausreichender optischer Güte wesentlich kostengünstiger herstellen. Die Erfindung sieht vor, daß der Hohlspiegel einen Kasten mit einer quadratischen Grundfläche aufweist, der Kasten mit einer flexiblen reflektierenden Folie bespannt ist und in ihm ein Unterdruck herrscht. Statt hochwertigen optischen Glases sieht die Erfindung eine auf einer Seite reflektierend beschichtete Kunststoffolie vor. Diese wird zum Beispiel auf die offene Oberseite eines Kastens mit quadratischer Grundfläche aufgelegt und dort luftdicht befestigt. Bei Erzeugen eines Unterdrucks im Kasten kommt der atmosphärische Druck zur Wirkung. Er wirkt auf die reflektierende Folie ein und drückt sie in Richtung auf den Boden des Kastens. Dabei wölbt sie sich unter Bildung eines Kugeloberflächenabschnittes nach innen ein. Sie bildet eine reflektierende Fläche in gleicher Form wie bei einem Hohlspiegel aus Glas. Zweckmäßig wird der Unterdruck durch eine an den Innenraum des Kastens angelegte Vakuumpumpe erzeugt. Der im Kasten herrschende Druck kann mit einem Regler gemessen und auf einem Sollwert gehalten werden.

Am Beispiel der in der Zeichnung gezeigten Ausführungsform wird die Erfindung nun weiter beschrieben. In der Zeichnung ist:
- Fig. 1: eine schematische Seitenansicht der erfindungsgemäßen Vorrichtung ohne Verwendung des Lasers,
- Fig. 2: eine Seitenansicht ähnlich Fig. 1 mit Verwendung des Lasers und
- Fig. 3: eine schematische Ansicht in Blickrichtung der Linie III - III in Fig. 2.

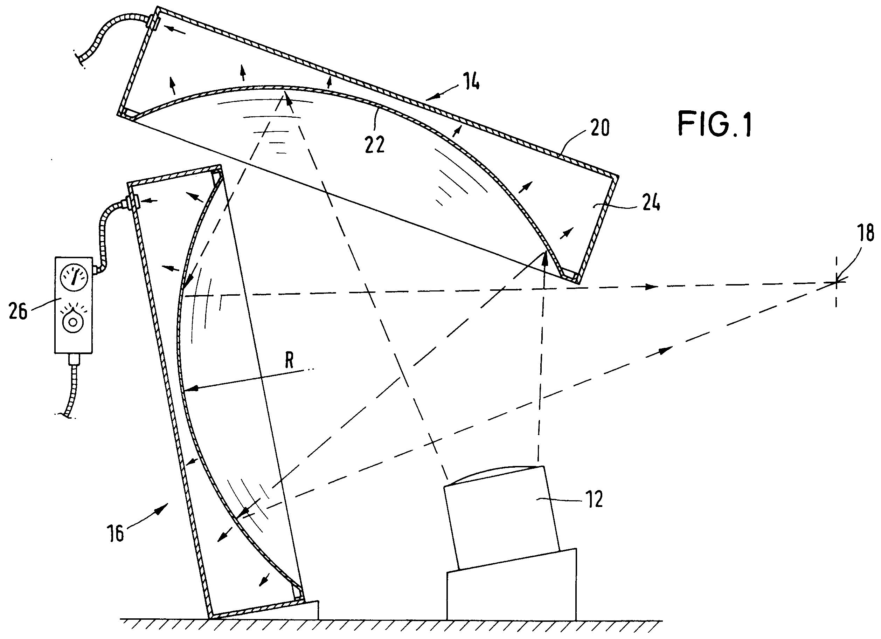

Fig. 1 zeigt den Bildgeber 12, den über diesem angeordneten ersten Hohlspiegel 14, den links in etwa zwischen Bildgeber 12 und erstem Hohlspiegel 14 angeordneten zweiten Hohlspiegel 16 und das frei im Raum stehende Luftbild 18. Dieses wird lediglich durch einige Striche angedeutet. Die beiden Hohlspiegel 14 und 16 bestehen im wesentlichen aus einem Kasten 20 und einer über deren offener Vorderseite gespannten Folie 22. Diese ist etwas elastisch und auf ihrer nach außen gerichteten Vorderseite reflektierend. Kasten 20 und Folie 22 schließen den Innenraum 24 ein. Eine Vakuumpumpe 26, die einen Regler enthält, ist über einen Schlauch an den Innenraum 24 angeschlossen. Fig. 1 ist nicht maßstäblich. Die Hohlspiegel 14 und 16 weisen eine Kantenlänge von etwa 2000 mm auf. An ihrer offenen Oberseite, die bei dem ersten Hohlspiegel 14 nach unten und bei dem zweiten Hohlspiegel 16 nach rechts zeigt, weisen sie einen kreisförmig ausgeschnittenen Randstreifen auf. Auf diesem liegt die Folie 22 mit ihrem Rand auf und ist an dem Randstreifen befestigt. Bei Einschalten der Vakuumpumpe 26 erzeugt diese im Innenraum 24 einen Unterdruck. Die im Innenraum 24 befindliche Luft wird über den Schlauch abgezogen. Gleichzeitig wölbt sich die Folie 22 in Richtung der eingezeichneten Pfeile nach innen aus. Dabei nimmt sie die Form eines Abschnittes einer Kugeloberfläche an. Der mit der Vakuumpumpe 26 zusammenwirkende Regler stellt sicher, daß im Innenraum 24 stets der gleiche Unterdruck herrscht. Damit wird die Folie 22 immer um das gleiche Maß eingewölbt. Im gezeigten Beispiel beträgt die Tiefe der genannten Einwölbung der Folie 22 etwa 150 mm.

Im Betrieb wirft der Bildgeber 12, bei dem es sich um ein Fernsehgerät handeln kann, ein Bild auf den ersten Hohlspiegel 14. Dieser wirft es auf den zweiten Hohlspiegel 16, und dieser projiziert es in den Raum nach rechts. Die gestrichelten Linien zeigen den Weg von zwei Lichtstrahlen vom Rand eines Bildes auf den Bildgeber 12 bis zum Luftbild 18, in dessen Ebene sie sich schneiden. Als Luftbild 18 ist das auf dem Bildgeber 12 erscheinende Bild im Raum sichtbar. Die Lage dieses Luftbildes 18 hängt vom Ort und vom Winkel der Ausrichtung des Bildgebers 12, des ersten Hohlspiegels 14 und des zweiten Hohlspiegels 16 ab. Der Ort und die Ausrichtung können durch Versuche ermittelt werden. Wie ausgeführt wurde, sieht ein Betrachter das Luftbild 18 an der in Fig. 1 gezeigten Stelle. Im dunklen Raum kann er die genaue Lage des Luftbildes 18 jedoch nicht feststellen. Der Betrachter hat den Eindruck, daß das Luftbild 18 vor ihm im Raum frei schwebt.

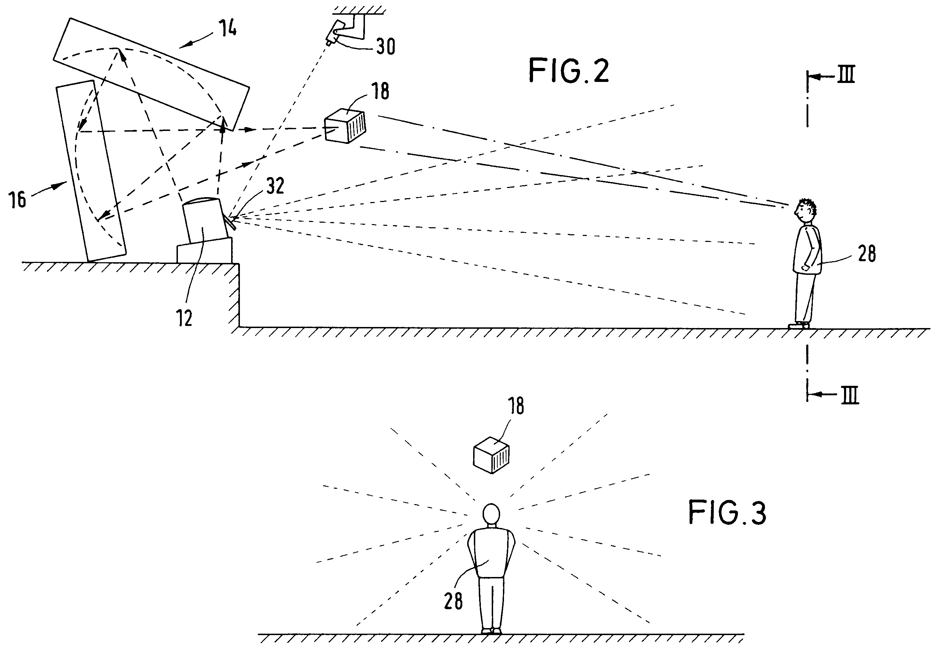

Die in Fig. 2 gezeigte abgewandelte Ausführungsform hilft hier ab. Sie enthält einen oben, zum Beispiel an der Raumdecke, befestigten Laser 30 und einen Spiegel 32. Dieser ist am Bildgeber 12 befestigt. Fig. 2 zeigt weiter einen Betrachter 28. Der Laser 30 strahlt farbige, kohärente Lichtstrahlen ab. Diese werden in Richtung der punktierten Linien vom Spiegel 32 in Richtung auf den Betrachter 28 in den Raum eingestrahlt. In einem Raum, dessen Luft etwas Staub oder Dampf enthält, kann der Betrachter 28 diese Strahlen genau erkennen. Sie bieten ihm eine Orientierungshilfe. Die Strahlen vermitteln dem Betrachter 28 auch den Eindruck, daß sich das Luftbild 18 nun an einer ganz bestimmten Stelle im Raum befindet. Deshalb ist es in Fig. 18 auch als ein Kasten und nicht mehr, wie in Fig. 1, als gestrichelte Linie eingezeichnet. Fig. 3 zeigt den Betrachter 28 von hinten mit dem nun genau vor ihm erscheinenden Luftbild 18. Fig. 3 zeigt weiter in gestrichelten Linien die vom Spiegel 32 in den Raum projizierten kohärenten, vom Laser 30 stammenden Laserstrahlen.

## Patentansprüche

1. Vorrichtung zum Erzeugen von Luftbildern mit einem Bildgeber und mit im Weg der von diesem abgegebenen Lichtstrahlen angeordneten Spiegeln, wobei der Bildgeber auf einen ersten Spiegel und dieser auf einen zweiten Spiegel gerichtet ist, der zweite Spiegel die Lichtstrahlen in Richtung auf einen Betrachter wirft und der Bildgeber und der erste Spiegel außerhalb des Weges der von dem zweiten Spiegel reflektierten Lichtstrahlen liegen, dadurch gekennzeichnet, daß der erste und der zweite Spiegel Hohlspiegel (14, 16) sind und ihre Krümmung einstellbar ist.

2. Vorrichtung nach Anspruch 1, dadurch gekennzeichnet, daß der Bildgeber (12) unter und der erste Hohlspiegel (14) über den von dem zweiten Hohlspiegel (16) reflektierten Lichtstrahlen angeordnet ist.

3. Vorrichtung nach Anspruch 1 und 2, dadurch gekennzeichnet, daß die Hohlspiegel (14, 16) bei einem Durchmesser von 2000 mm eine Tiefe von 70 bis 200 mm, vorzugsweise 80 bis 150 mm, aufweisen.

4. Vorrichtung nach einem der Ansprüche 1 bis 3, dadurch gekennzeichnet, daß ein Laser (30) Laserstrahlen in Richtung auf den Betrachter (28) wirft.

5. Vorrichtung nach Anspruch 4, dadurch gekennzeichnet, daß der Laser (30) die von ihm erzeugten Laserstrahlen auf einen Spiegel (32) und dieser die Laserstrahlen in Richtung auf den Betrachter (28) wirft.

6. Vorrichtung nach Anspruch 5, dadurch gekennzeichnet, daß der Spiegel (32) auf dem Bildgeber (12) angeordnet ist.

7. Vorrichtung nach Anspruch 1, dadurch gekennzeichnet, daß der Hohlspiegel (14, 16) einen Kasten (20) mit einer quadratischen Grundfläche aufweist, der Kasten (20) mit einer flexiblen reflektierenden Folie (22) bespannt ist und in ihm ein Unterdruck herrscht.

8. Vorrichtung nach Anspruch 7, dadurch gekennzeichnet, daß der Unterdruck durch eine an den Innenraum des Kastens (20) angelegte Vakuumpumpe (26) erzeugt wird.

9. Vorrichtung nach Anspruch 8, dadurch gekennzeichnet, daß der Unterdruck durch einen ihn messenden und auf die Vakuumpumpe (26) einwirkenden Regler auf einem Sollwert gehalten wird.
